# EUROPEAN PATENT APPLICATION

(11) **EP 2 455 146 A1**
(43) Date of publication of application: **23.05.2012**
(21) Application number: 09847391.1
(22) Date of filing: 20.10.2009
(51) Int. Cl.: A63F 13/00

(54) **SELF-POWERED SPEED RACING APPARATUS**

(30) Priority: 16.07.2009 KR 20090064714
(71) Applicant: Design Park Development Co., Ltd., Seoul 157-240 (KR)
(72) Inventor: KIM, Yo-Seob, Gyeonggi-do 415-779 (KR)
(74) Representative: Colombo, Michel
(86) International application number: PCT/KR2009/006056
(87) International publication number: WO 2011/007934

(57) **Abstract**

An independent electric power type speed race apparatus is disclosed. The independent electric power type speed race apparatus comprises a first health cycle comprising a first pedal, a first cycle rotary body rotating by handling of the first pedal, and a first cycle load driving part working as a load checking the rotation of the first cycle rotary body; a first cycle speed sensor sensing a rotation speed of the first cycle rotary body; a second health cycle comprising a second pedal, a second cycle rotary body rotating by handling of the second pedal, and a second cycle load driving part working as a load checking the rotation of the second cycle rotary body; a second cycle speed sensor sensing a rotation speed of the second cycle rotary body; a display plate installed at the front of the first health cycle and the second health cycle; a plurality of first LEDs installed on the front side of the display plate and forming a first race track; a plurality of second LEDs installed on the front side of the display plate and forming a second race track in the face of the first race track; and a main processor controlling the race between the first race cycle and the second race cycle by turning on the plurality of first LEDs forming the first race track in sequence according to the rotation speed of the first cycle rotary body which is sensed by the first cycle speed sensor and turning on the plurality of second LEDs forming the second race track in sequence according to the rotation speed of the second cycle rotary body which is sensed by the second cycle speed sensor.

## Description

The present invention relates to an independent electric power type speed race apparatus, and more particularly to an independent electric power type speed race apparatus which is installed in an indoor area or an outdoor area, and can maximizes an exercise effect by exercising for a promoting health together with enjoying a race game.

As a concern about health is increasing recently, a concern about an indoor and outdoor exercise is increasing too.

Depending on these social trends, jogging track and exercise equipment are installed and in an apartment complex which is constructed by the construction firm as well as in the park which is constructed by national or local government.

Also, we can easily find health club around us. A treadmill and a health cycle are a typical example of the exercise equipments installed in a health club.

Of these, a health cycle is exercise equipment of which an exerciser takes exercise indoor by rotating a pedal as like riding a real cycle. And it is possible to increase the intensity of the exercise by controlling volume of a load applied to the pedals.

However, because an exerciser takes exercise alone and repeats a simple motion in case of an ordinary health cycle, he is prone to get tired of that exercise. So, it is difficult to continue an exercise enough to have a desired effect of an exercise.

Therefore, health clubs install a television monitor at the front of a health cycle to prevent such boring.

Therefore, the present invention has been made in view of the above problems, and it is an object of the present invention to provide an independent electric power type speed race apparatus which is installed in an indoor area or an outdoor area, and can maximizes a exercise effect by exercising for a promoting health together with enjoying a race game.

In accordance with an aspect of the present invention, the above and other objects can be accomplished by the provision of an independent electric power type speed race apparatus comprising: a first health cycle comprising a first pedal, a first cycle rotary body rotating by handling of the first pedal, and a first cycle load driving part working as a load checking the rotation of the first cycle rotary body; a first cycle speed sensor sensing a rotation speed of the first cycle rotary body; a second health cycle comprising a second pedal, a second cycle rotary body rotating by handling of the second pedal, and a second cycle load driving part working as a load checking the rotation of the second cycle rotary body; a second cycle speed sensor sensing a rotation speed of the second cycle rotary body; a display plate installed at the front of the first health cycle and the second health cycle; a plurality of first LEDs installed on the front side of the display plate and forming a first race track; a plurality of second LEDs installed on the front side of the display plate and forming a second race track in the face of the first race track; and a main processor controlling the race between the first race cycle and the second race cycle by turning on the plurality of first LEDs forming the first race track in sequence according to the rotation speed of the first cycle rotary body which is sensed by the first cycle speed sensor and turning on the plurality of second LEDs forming the second race track in sequence according to the rotation speed of the second cycle rotary body which is sensed by the second cycle speed sensor.

Herein, the first health cycle further comprises a first operating button outputting a first operating signal; the second health cycle further comprises a second operating button outputting a second operating signal; and the main processor controls the first cycle load driving part and the second cycle load driving part to change the load transmitted to the first cycle rotary body and the second cycle rotary body according to whether the first operating signal and the second operating signal from the first operating button and the second operating button are received when an incident section provided in the first race track and the second race track respectively is come during the turning-on of the plurality of first LEDs and the plurality of second LEDs.

Also, the first race track and the second race track are formed on the front side of the display plate in the shape of '8' and face each other.

Herein, the independent electric power type speed race apparatus further comprises a first segment display part and a second segment display part installed on the front side of the display plate; wherein the main processor display information about the rotation speed of the first cycle rotary body which is sensed by the first cycle speed sensor and information about the rotation speed of the second cycle rotary body which is sensed by the second cycle speed sensor through the first segment display part and the second segment display part, respectively.

Also, the independent electric power type speed race apparatus further comprises a sound output part outputting a sound according to control of the main processor; wherein the main processor outputs a warning sound through the sound output part to the first health cycle or the second health cycle when the first operating signal or the second operating signal is not received in the state that the incident section is come; and wherein the main processor outputs a passing sound through the sound output part to the first health cycle or the second health cycle when the first operating signal or the second operating signal is received in the state that the incident section is come.

As described above, the present invention provides an independent electric power type speed race apparatus which is installed in an indoor area or an outdoor area, can break up the boredom caused by a conventional health cycle, and can maximize a exercise effect by exercising for a promoting health together with enjoying a race game which is played by two users.

Also, an incident is come while the user enjoys the race game and the load is changed according to whether the user responses to the incident. Thus the user can concentrate on the race game all the more, and then exercise effect is maximized.

Also, the user can experience the race game on the real road, such as a slope road through loads against the health cycle which are supplied by sections and are different from each other.

The above and other objects, features, and other advantages of the present invention will be more clearly understood from the following detailed description taken in conjunction with the accompanying drawings, in which:

FIG. 1 is a perspective view illustrating an independent electric power type speed race apparatus according to the present invention;

FIGS. 2 and 3 are views illustrating a constitution of a first health cycle of the independent electric power type speed race apparatus according to the present invention;

FIG. 4 is a control block diagram describing the independent electric power type speed race apparatus according to the present invention; and

FIG. 5 is a view illustrating an example of a display plate of the independent electric power type speed race apparatus according to the present invention.

Now, preferred embodiments of the present invention will be described in detail with reference to the annexed drawings.

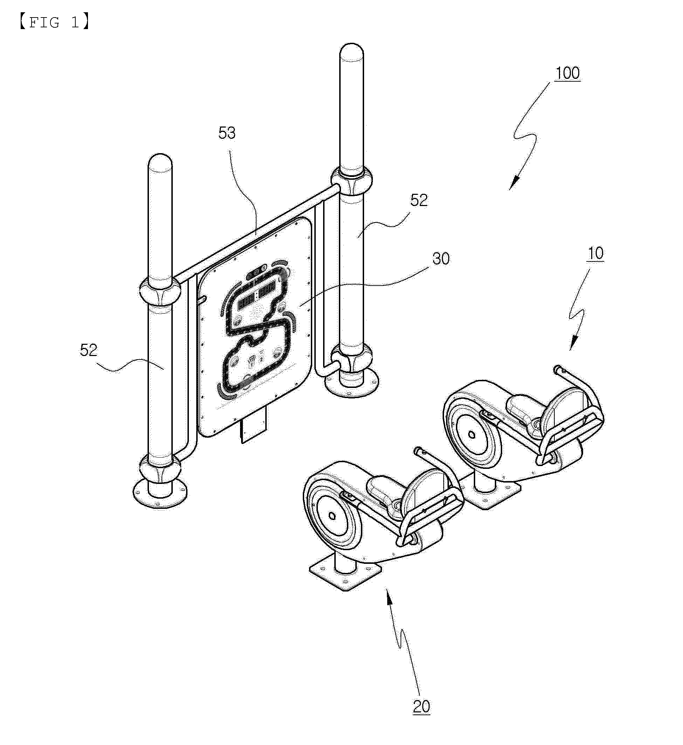

FIG. 1 is perspective view illustrating an independent electric power type speed race apparatus. As shown in FIG. 1, the independent electric power type speed race apparatus 100 according to the present invention comprises a supporting frame 51 and 52, a first health cycle 10, a second health cycle 20, and a display plate 30.

The display plate 30, as shown in FIG. 1, is supported by the support frame 51 and 52, and is placed at the position and the height where an user can look at the display plate 30 when the user sits on the first health cycle 10 and the second health cycle 20. Herein, the detail description about the display plate 30 is mentioned later.

The support frame 51 and 52 is installed in perpendicularity and pairs on a place where the independent electric power type speed race apparatus 100 according to the present invention is installed, and then supports the display plate 30. Herein, a sub frame 53 may be connected to and between the pair of the support frames 51 and 52, as shown in FIG. 1. Thus, the display plate 30 can be more stable by being supported by the pair of the support frames 51 and 52 and the sub frame 53.

The first health cycle 10 and the second health cycle 20 are positioned at the predetermined distance from the display plate 30, where the user can look at the display plate positioned at the front thereof 30 when the user sits on the first health cycle 10 and the second health cycle 20.

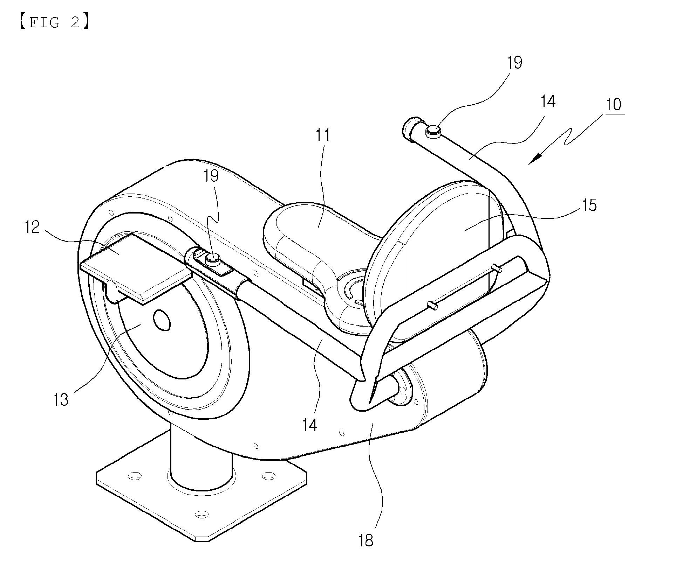

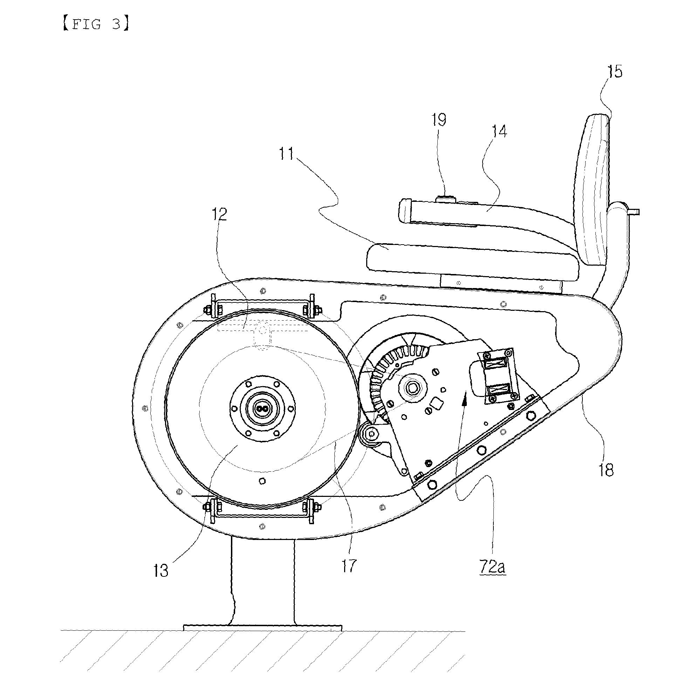

The first health cycle 10, as shown in FIGS. 2 and 3, may comprise a first pedal 12, a first cycle rotary body 13, a first cycle load driving part 72a, and a first operating button 75a.

The first pedal 12 on which the user's feet are put in the state that the user sits on a saddle 11 of the first health cycle 10 is used for rotating the first cycle rotary body 13. Herein, the first pedal 12 is installed on both side of the first health cycle 10 in correspondence with the user's feet.

The first cycle rotary body 13 rotates according to handling of the first pedal 12. Herein, the first cycle rotary body 13 is rotatablely contained in and supported by a cycle main body 18. Also, the first cycle rotary body 13 is connected to the first cycle load driving part 72a, as shown in FIG. 3.

Also, the first cycle load driving part 72a works as a load checking the rotation of the first cycle rotary body 13 according to a main processor 70 which is described later. In the present invention, the first cycle rotary body 13 and the first cycle load driving part 72a is connected to each other through a belt 17, thus the first cycle load driving part 72a can work as the load checking the rotation of the first cycle rotary body 13 while the first cycle load driving part 72a rotates according to the rotation of the first cycle rotary body 13. That is, as shown in FIG. 3, an electromagnet is provided in the first cycle load driving part 72a, and the load can be changed by a change of a magnetic force of the electromagnet according a change of a current supplied to the electromagnet.

Meanwhile, the first operating part 75a is provided in a predetermined position of the first health cycle 10, and outputs a first operating signal when the user push down the first operating button 75a. Herein, the first operating signal is transmitted to the main processor 70 which is described later.

The first operating button 75a according to the present invention is place on a position where the user is push down the first operating button 75a easily in the state that the user sits on the saddle 11 and operates the first pedal 12, that is in the state that the user uses the first health cycle 10. In FIGS 2 and 3, the first operating button 75a is provided on a pair of handles 14 which is gripped by the user while the user uses the first health cycle 10, respectively.

A reference number 15 in FIG. 2 and 3 which is not mentioned above indicates a backrest supporting the user's back.

Also, the second health cycle 20 may comprise a second pedal, a second cycle rotary body, a second cycle load driving part 72b, a second operating button 75b, a belt, a handle, and a backrest in correspondence with the first health cycle 10, and structures and functions thereof are correspondence with the elements of the first health cycle 10, respectively. Thus, a detail description about the elements of the second health cycle 20 is omitted.

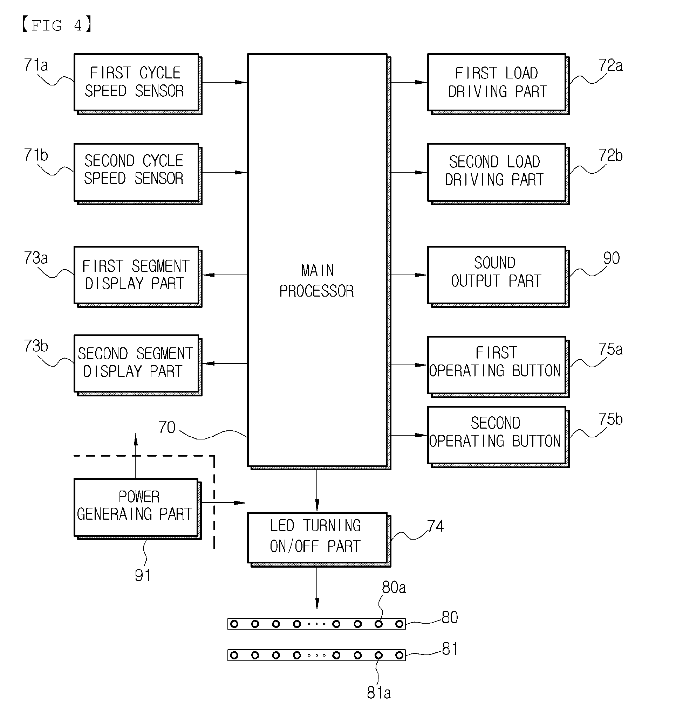

Meanwhile, as shown in FIG. 4, the independent electric power type speed race apparatus 100 according to the present invention further comprises a first cycle speed sensor 71 a, a second cycle speed sensor 71 b, a plurality of first LEDs (light emitting diodes), a plurality of second LEDs, and the main processor 70.

The first cycle speed sensor 71 a senses a rotation speed of the first cycle rotary body 13 of the first health cycle 10. Also, the second cycle speed sensor 71 b senses a rotation speed of the second cycle rotary body of the second health cycle 20. Herein, the first cycle speed sensor 71 a and the second cycle speed sensor 71 b are installed in a predetermined area of the first health cycle 10 and the second health cycle 20, respectively, and provided capable of sensing the rotation speed of the first cycle rotary body 13 and the second cycle rotary body while the first cycle rotary body 13 and the second cycle rotary body rotate according to operation of the first pedal 12 and the second pedal by the user. For example, the first speed sensor 71 a and the second speed sensor 71 b may be provided with a type of an infrared sensor which is capable of sensing the rotation of the first cycle rotary body 12 and the second cycle rotary body.

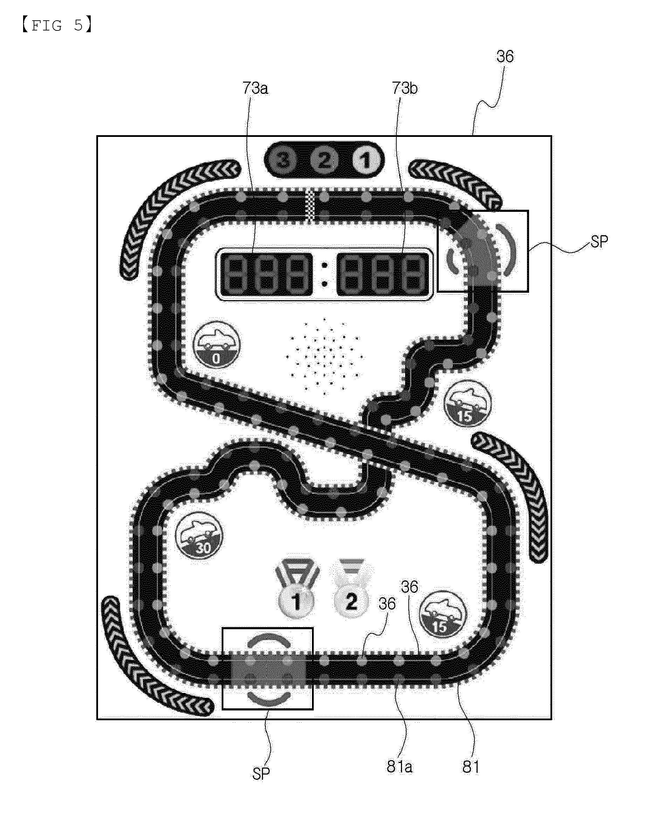

The plurality of first LEDs 80a is installed on a front side of the display plate 30. FIG. 5 shows an example of the display plate 30 according to the present invention. In FIG. 5, the plurality of first LEDs 80a is arranged on the front side of the display plate in the shape of '8'. Herein, the plurality of first LEDs 80a arranged in the shape of '8' forms a first race track 80 about the first health cycle 10.

Also, as shown in FIG. 5, the plurality of second LEDs 81 a is installed on the front side of the display plate 30 and forms a second race track 81 about the second health cycle 20. Herein, the plurality of second LEDs 81 a is arranged in the shape of '8' and faces the plurality of first LEDs 80a, so that the second race track 81 is formed apart from the first race track 80 at the predetermined distance.

The main processor 70 controls a LED turning on/off part 74 to selectively turn on and off the plurality of first LEDs 80a and the plurality of second LEDs 81 a forming the first race track 80 and the second race track 81. Herein, the main processor 70 controls the LED turning on/off part 74 to turn on the plurality of first LEDs 80a forming the first race track 80 in sequence according to the rotation speed of the first cycle rotary body 13 which is sensed by the first cycle speed sensor 71 a.

Also, the main processor 70 controls the LED turning on/off part 74 to turn on the plurality of second LEDs 81a forming the second race track 81 in sequence according to the rotation speed of the second cycle rotary body 14 which is sensed by the second cycle speed sensor 71 b.

According to the above mentioned constitution, two users sit the first health cycle 10 and the second health cycle 20 and operate the first pedal 12 of the first health cycle 10 and the second pedal of the second health cycle 20 for race game, respectively. And then, the first cycle speed sensor 71 a and the second cycle speed sensor 71 b sense the rotation speed of the first cycle rotary body 13 and the second cycle rotary body and transmit the main processor 70.

And then, the main processor 70 turns on the first LEDs 80a in sequence as many as moving distance of the first health cycle 10 according to the rotation speed from the first cycle speed sensor 71 a, and turns on the second LEDs 81 a in sequence as many as moving distance of the second health cycle 20 according to the rotation speed from the second cycle speed sensor 71 b. Thus, the main processor 70 controls the race game between the first health cycle 10 and the second health cycle 20.

Herein, the user can check the progress of the race game by checking how many the first LEDs 80a forming the first race track 80 and the second LEDs 81 a forming the second race track 81 are turned on. Thus, the user can not only enjoy the race with the partner but also exercise through the health cycle 10 and 20.

Meanwhile, the independent electric power type speed race apparatus 100 may be provided with an incident section SP in the first race track 80 and the second race track 81, as shown in FIG. 5. Herein, when the incident section in the first race track 80 and the second race track 81 is come while the plurality of first LEDs 80a and the plurality of second LEDs 81 a are turned on in sequence, the main processor 70 check whether the first operating signal and the second operating signal from the first operating button 75a and the second operating button 75b are received.

And then, the main processor 70 controls the first cycle load driving part 72a to maintain the load transmitted to the first cycle rotary body 13 from the first cycle load driving part 72a in the case that the first operating signal is received in the incident section SP of the first race track 80, and controls the first cycle load driving part 72a to increase the load transmitted to the first cycle rotary body 13 from the first cycle load driving part 72a in the case that the first operating signal is not received in the incident section SP of the first race track 80.

In the same manner, the main processor 70 controls the second cycle load driving part 72b to maintain the load transmitted to the second cycle rotary body from the second cycle load driving part 72b in the case that the second operating signal is received in the incident section SP of the second race track 81, and controls the second cycle load driving part 72b to increase the load transmitted to the second cycle rotary body from the second cycle load driving part 72b in the case that the second operating signal is not received in the incident section SP of the second race track 81.

That is, the main processor 70 controls the first cycle load driving part 72a and the second cycle load driving part 72b to change the load transmitted to the first cycle rotary body 13 and the second cycle rotary body according to whether the first operating signal and the second operating signal are received in the incident section of the first race track 80 and the second race track 81.

Accordingly, an incident is come while the user enjoys the race game, the load is changed according to whether the user responses to the incident, and then the user can concentrate on the race game all the more. Thus, exercise effect is maximized by means that the user can concentrate on using the first health cycle 10 and the second health cycle 20.

Meanwhile, the main processor 70 may separate the first race track 80 and the second race track 81 into a plurality of sections, respectively, and control the first cycle load driving part 72a and the second cycle load driving part 72b to change the load transmitted to the first cycle rotary body 13 and the second cycle rotary body by the section.

For example, as shown in FIG. 5, the main processor 70 may regard curved sections of the first race track 80 and the second race track 81 as a slope road, and control the first cycle load driving part 72a and the second cycle load driving part 72b to transmit the load corresponding to the 15° or 30° slope road to the first cycle rotary body 13 and the second cycle rotary body.

Also, the main processor 70 may regard straight sections of the first race track 80 and the second race track 81 as a 0° slope road, that is a flat road, and control the first cycle load driving part 72a and the second cycle load driving part 72b to transmit the load corresponding to the flat road to the first cycle rotary body 13 and the second cycle rotary body.

Accordingly, the user can experience the race game on the real road having the slope through loads which are supplied by sections and are different from each other.

Meanwhile, the independent electric power type speed race apparatus 100 may comprise a first segment display part 73a and a second segment display part 73b installed on the front side of the display plate 70, as shown in FIGS. 4 and 5.

Herein, the main processor 70 may display information about the rotation speed of the first cycle rotary body 13 which is sensed by the first cycle speed sensor 71 a through the first segment display part 73a, and information about the rotation speed of the second cycle rotary body which is sensed by the second cycle speed sensor 71 b through the second segment display part 73b.

Also, information about the rotation speed displayed on the first segment display part 73a and the second segment display part 73b may comprise the rotation speed of the first cycle rotary body 13 and the second cycle rotary body or the moving distance calculated on the basis of the rotation speed.

Also, information about the rotation speed display on the first segment display part 73a and the second segment display part 73b may comprise information about a remained distance to an end of the race game. For example, if the race game according to the present invention is continued till 10 rounds of the first race track 80 and the second race track 81 in FIG. 5, the number of remained tracks may be displayed on the first segment display part 73a and the second segment display part 73b.

A reference number 90 in FIG. 4 which is not mentioned above indicates a sound output part 90. The main processor 70 may output music, information about the track, various sounds or comments, etc. through the sound output part 90 during the race game. Herein, the main processor 70 may output a warning sound such as a beep through the sound output part 90 to the first health cycle 10 or the second health cycle 20 when the first operating signal or the second operating signal is not received in the state that the incident section of the first race track 80 and the second race track 81 is come.

Also, the main processor 70 may output a passing sound through the sound output part 90 to the first health cycle 10 or the second health cycle 20 when the first operating signal or the second operating signal is received in the state that the incident section of the first race track 80 and the second race track 81 is come.

Also, when the race game starts according to operating the pedal of the first health cycle 10 or the second health cycle 20 by the user, the main processor 70 may inform the user of the start of the race game by outputting a starting sound of a car through the sound output part 90. In company with that, the main processor 70 may show the user the countdown of the start of the race game through turning on the first LEDs 80a and the second LEDs 80b in sequence such as a red light -> a yellow light -> a green light.

Meanwhile, the independent electric power type speed race apparatus 100 may comprise a power generating part 91, as shown in FIG. 4. The power generating part 91 converts a rotating motion of the first cycle rotary body 13 and the second cycle rotary body to electric energy, when the user rotates the first cycle rotary body 13 and the second cycle rotary body.

For example, the rotation of the first cycle rotary body 13 and the second cycle rotary body rotates an alternator of the power generating part 91 and then the power generating part 91 generates an alternating current. The alternating current is converted to a direct current through a rectifying circuit. Thus, the electric power can be supplied to circuit elements, such as the main processor 70, the LED turning on/off part 74, the first LEDs 80a, the second LEDs 81 a, the first segment display part 73a, the second segment display part 73b, etc. of the independent electric power type speed race apparatus 100. Herein, the power generating part 91 may comprise an electric condenser (not shown) for storing the generated electric power.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. An independent electric power type speed race apparatus comprising:
- a first health cycle comprising a first pedal, a first cycle rotary body rotating by handling of the first pedal, and a first cycle load driving part working as a load checking the rotation of the first cycle rotary body;
- a first cycle speed sensor sensing a rotation speed of the first cycle rotary body;
- a second health cycle comprising a second pedal, a second cycle rotary body rotating by handling of the second pedal, and a second cycle load driving part working as a load checking the rotation of the second cycle rotary body;
- a second cycle speed sensor sensing a rotation speed of the second cycle rotary body;
- a display plate installed at the front of the first health cycle and the second health cycle;
- a plurality of first LEDs installed on the front side of the display plate and forming a first race track;
- a plurality of second LEDs installed on the front side of the display plate and forming a second race track in the face of the first race track; and
- a main processor controlling the race between the first race cycle and the second race cycle by turning on the plurality of first LEDs forming the first race track in sequence according to the rotation speed of the first cycle rotary body which is sensed by the first cycle speed sensor and turning on the plurality of second LEDs forming the second race track in sequence according to the rotation speed of the second cycle rotary body which is sensed by the second cycle speed sensor.

2. The independent electric power type speed race apparatus according to claim 1, wherein the first health cycle further comprises a first operating button outputting a first operating signal;
wherein the second health cycle further comprises a second operating button outputting a second operating signal; and
wherein the main processor controls the first cycle load driving part and the second cycle load driving part to change the load transmitted to the first cycle rotary body and the second cycle rotary body according to whether the first operating signal and the second operating signal from the first operating button and the second operating button are received when an incident section provided in the first race track and the second race track respectively is come during the turning-on of the plurality of first LEDs and the plurality of second LEDs.

3. The independent electric power type speed race apparatus according to claim 2, wherein the main processor separates the first race track and the second race track into a plurality of sections, respectively, and controls the first cycle load driving part and the second cycle load driving part to change the load transmitted to the first cycle rotary body and the second cycle rotary body by the section.

4. The independent electric power type speed race apparatus according to claims 2 or 3, wherein the first race track and the second race track are formed on the front side of the display plate in the shape of '8' and face each other.

5. The independent electric power type speed race apparatus according to claim 4, further comprising a first segment display part and a second segment display part installed on the front side of the display plate;
wherein the main processor display information about the rotation speed of the first cycle rotary body which is sensed by the first cycle speed sensor and information about the rotation speed of the second cycle rotary body which is sensed by the second cycle speed sensor through the first segment display part and the second segment display part, respectively.

6. The independent electric power type speed race apparatus according to claim 4, further comprising a sound output part outputting a sound according to control of the main processor;
wherein the main processor outputs a warning sound through the sound output part to the first health cycle or the second health cycle when the first operating signal or the second operating signal is not received in the state that the incident section is come; and
wherein the main processor outputs a passing sound through the sound output part to the first health cycle or the second health cycle when the first operating signal or the second operating signal is received in the state that the incident section is come.
